# EUROPEAN PATENT SPECIFICATION

(11) **EP 4 303 122 B1**
(45) Date of publication and mention of the grant of the patent: **14.10.2026**
(21) Application number: 23180814.8
(22) Date of filing: 22.06.2023
(51) Int. Cl.: B64C 9/02, B64C 3/50, B64C 9/22, B64C 9/08, B64C 13/28, B64C 9/24, B64C 3/18, B64C 3/28, B64C 9/14

(54) **WING FOR AN AIRCRAFT**
FLÜGEL FÜR EIN FLUGZEUG
AILE POUR UN AÉRONEF

(30) Priority: 07.07.2022 DE 102022116951; 06.10.2022 DE 102022125771
(43) Date of publication of application: 10.01.2024
(73) Proprietor: Airbus Operations GmbH, 21129 Hamburg (DE)
(72) Inventor: BENSMANN, Stefan, 21129 Hamburg (DE)
(74) Representative: LKGLOBAL Partnerschaftsgesellschaft mbB

(56) References cited:
- EP-A1- 4 140 878
- GB-A- 1 461 792
- US-A- 3 941 334
- US-A- 4 285 482
- US-A1- 2014 138 481
- US-B2- 10 589 839
- US-B2- 8 128 038

## Description

### Technical field

The invention relates to a wing for an aircraft and an aircraft having such a wing.

### Background of the invention

Commercial or transport aircraft having fixed wings are usually equipped with high lift systems that comprise deployable high lift devices for selectively increasing the wing surface and/or the camber for start and landing procedures. These high lift devices often comprise leading-edge and trailing-edge devices. For example, a droop nose is provided at a leading edge of the wing and is movable from a retracted position, in which the slat is flush with a fixed wing part, into a downward direction through an actuation mechanism.

The actuation mechanism is usually located inside the fixed wing part and may comprise two swivably supported hinge arms that are spaced apart in a spanwise direction and coupled with the droop nose through lugs, knuckles, joints, or other coupling devices. The hinge arms are commonly arranged forward of a front spar, which is usually fluid-tight as it acts as a forward delimitation for a fuel tank arranged inside a so-called wing box. In a comparable manner, the wing box has a rear spar, behind which an actuation mechanism for trailing-edge control surfaces may be provided. Thus, the front spar and rear spar are usually designed in a fluid-tight manner and represent installation boundaries for high lift control systems.

For example, EP 2 726 372 B1 shows a wing assembly having a main wing and a high-lift body movably coupled to the leading edge of the main wing, the coupling achieved by a driving device, an adjusting lever arrangement having a first main wing lever coupled to the main wing formed between a first adjusting lever pivot joint and the high-lift body as well as a second main wing lever coupled to the main wing so as to form an effective lever arm between a second adjusting lever pivot joint and a first adjusting lever pivot joint, and at least one adjusting lever non-rotatably coupled to the high-lift body, the high-lift body being movable between an initial position and a maximally adjusted position with respect to the initial position, at least one guide mechanism aiding movement of the high-lift body.

US 3941334 A1 describes a variable camber apparatus for the leading edge of an airfoil. GB 1461792 A describes a high-lift flap device for an aircraft wing.

US 10589839 B2 describes a wing for an aircraft with a main wing and a slat and a connection assembly for movably connecting the slat to the main wing.

US 4285482 A1 describes a wing leading edge high lift device in the form of a spanwise slat segment. US 2014/0138481 A1 describes a deployment mechanism for deploying an auxiliary wing surface device from an aircraft wing body.

US 8128038 B2 describes a high-lift device for an aircraft. Late-published EP 4140878 A1 describes a wing for an aircraft comprising a main wing, and a leading edge high lift assembly comprising a high lift body, and a connection assembly connecting the high lift body to the main wing.

### Summary of the claimed invention

In future aircraft, other concepts for storing fuel or other energy carriers may be considered. Thus, it is an object of the invention to propose an alternative wing design that is improved regarding the support of a droop nose.

This object is met by a wing having the features of independent claim 1. Preferred embodiments are claimed in the dependent claims 2-9. Furthermore, the invention claims an aircraft comprising at least one wing according to any of claims 1-9.

### Summary of the disclosure :

Advantageous embodiments and further improvements may be gathered from the subclaims and the following description.

A wing for an aircraft is proposed, comprising a leading edge, a trailing edge, an upper skin extending between the leading edge and the trailing edge, a lower skin extending between the leading edge and the trailing edge, at least one spar extending between the upper skin and the lower skin in a spanwise direction to create a wing box with the upper skin and the lower skin, and at least one droop nose arranged at the leading edge, wherein the at least one droop nose is coupled with a forward end of a hinge arm that extends in a chordwise direction, and wherein a rearward end of the hinge arm is swivably supported directly at or in the wing box.

The leading edge is a forwardmost part of the wing, which faces into the flight direction, i.e. into the airflow. It is usually not far from a stagnation line that separates an upper and a lower part of the wing and that may be found close to the region where the wing has its maximum curvature. The trailing edge represents a rearmost edge. The upper skin and the lower skin are curved to provide the desired aerodynamic characteristics, which may depend on the desired velocity and altitude range of the aircraft, to which the wing is attached.

At the leading edge, one or more droop noses may be provided. By moving the droop nose downwards along a forward end of a fixed wing part, the camber of the leading-edge region is increased. Each droop nose may be connected to one or a pair of actuation elements in the form of a hinge arm, which is driven through an actuator.

For providing a sufficient structural stability, the wing, i.e. the main or fixed wing part, comprises at least one spar that extends along the spanwise direction. This may include a front spar and/or a rear spar. It is advantageous to use at least one front spar and at least one rear spar to create a box-like structure with the upper skin and the lower skin, which box-like structure is referred to as wing box.

Future aircraft may not require the wing box to be completely filled with kerosene, but instead use other smaller, separate tanks or other kinds of energy carriers, such as pressure tanks or cryogenic tanks for storing hydrogen, electrical energy storage devices or other. This allows to design the front and/or the rear spar differently. In particular, the respective spar does not need to be fluid-tight and does not represent a delimitation for an interior fuel tank.

The above-identified object is solved by supporting the rearward end of the hinge arm inside or directly at the wing box. Thus, the hinge arm may comprise a length in a chordwise direction that clearly exceeds the length of common hinge arms, since it can be swivably supported in a region, which is commonly only used as a fuel tank for storing kerosene. A dedicated sealing or an elaborate design of sealed pockets in the front spar or a tank delimited by the front spar is not required. Since the fluid-tightness is not necessary and since the position of the front spar is not a dimensioning factor of a fuel tank, the front spar may even be placed more forward or more rearward in comparison with common wing designs, upon desire and depending mainly on the structural stability of the wing. The mechanical design of a wing or a wing box may thus be driven mainly by the aerodynamics and the structural stability.

Since the front spar is only used for providing the mechanical stability for the wing box, the hinge arm may be directly attached to a forward side, a rearward side or both. Also, the rearward end may be placed completely inside the wing box, such that the hinge arm protrudes through front spar. In addition, this increased length allows to increase a rotation radius of the droop nose, which may further improve the aerodynamic performance. If the hinge arm protrudes through the front spar, the front spar may comprise a support element for supporting the hinge arm for introducing mechanical loads directly into the front spar. The support element may be adjustable to compensate manufacturing tolerances.

In an advantageous embodiment, the at least one spar also comprises a rear spar, wherein the rearward end is arranged rearward of the front spar. Preferably, the front spar and the rear spar are arranged to follow constant chordwise points along the spanwise dimension. In other words, they may both be placed at a certain relative position of local chords throughout a major spanwise part of the wing. It is not ruled out that the wing according to the invention also has a main spar that is arranged between the front spar and the rear spar. Since the hinge arm is coupled to the droop nose, the rearward end is located at least near the front spar.

According to the invention, the hinge arm extends through an opening arranged in the front spar. The opening should be dimensioned in a way that the hinge arm protrudes through it without contacting edges of the opening in every possible extension state of the droop nose, even when the wing elastically deforms during flight. A dedicated, sealed pocket directly following the opening is not required.

In an advantageous embodiment, the at least one spar comprises a framework structure. Thus, the respective spar does not comprise a closed surface, but is created by a planar structure consisting of a plurality of interconnected elongate or flat elements. This reduces the weight of the respective spar. Since a framework has a plurality of openings, in particular the design of the front spar and the hinge arm can be harmonized, such that the hinge arm can pass through one of the openings of the framework structure.

According to the invention, the wing further comprises an actuator coupled with the hinge arm, wherein the actuator is arranged in front of the wing box and/or directly on the at least one spar. For example, the actuator may be placed in front of the front spar, directly on a front side of the front spar outside the wing box. The actuator may be a rotary or linear actuator. It may be a hydraulic or electric actuator, which may optionally comprise a gear. For example, it may be a geared rotary actuator. The actuator may be coupled with the hinge arm through an actuation lever, which comprises a first end and a second end, wherein the first end is swivably coupled with the hinge arm and wherein the second end is swivably coupled with an arm of the actuator. The arm may extend in a radial direction from a rotational axis of the actuator and may be rigidly coupled with the actuator. The motion of the hinge arm is controlled by the position of the rearward end, the placement of the first end along the hinge arm, the design of the respective actuator lever, the length of the arm of the actuator and the angular speed of the arm.

In an advantageous embodiment, the hinge arm comprises a forward section, a rearward section and a kink between the forward section and the rearward section, wherein the sections run vertically upwards towards the kink in a retracted position of the droop nose. The kink allows to place the forward end of the hinge arm in a lower vertical position than with a straight arm, since a contact between a lower contour of the hinge arm and an inner side of the lower skin as well as stiffening elements arranged thereon can be avoided. The kink of the hinge arm may be provided in or close to a region where an actuator is coupled with the hinge arm.

In an exemplary embodiment, the kink passes through a plane defined by the front spar when moving the hinge arm between a retracted position and extended positions. The kink is thus arranged in the region of the front spar, which allows to avoid a contact between the hinge arm and a bottom side of the front spar and thus increases the radius of deployment of the droop nose.

In an exemplary embodiment, the rearward section of the hinge arm is substantially horizontal in a maximum extended position of the droop nose. If the forward and rearward sections create an inverted V-shape, it is advantageous if the kink is placed in the plane defined by the front spar in the maximum extended position of the droop nose, as the rearward section may then move as close as possible to the lower surface. The swivel axis for the hinge arm may be placed in substantially the same vertical position as the kink in the maximum extended position. However, it may be as close as possible to the lower skin. The forward end of the hinge arm may be moved as far downward as possible in this configuration.

In an exemplary embodiment, the hinge arm is designed to move the forward end downwards to extend the droop nose. The droop nose may be rigidly coupled with the hinge arm, such that it directly follow the motion of the hinge arm.

In an exemplary embodiment, the rearward end of the hinge arm is supported in a swiveling joint having a swivel axis that is arranged at a relative chordwise position of at least 20% of the respective local chord. The hinge arm thus clearly extends further in a rearward direction than in commonly designed wings.

In an advantageous embodiment, the wing further comprises a plurality of parallel ribs between the upper skin and the lower skin, extending in a chordwise direction and arranged at a distance to each other, wherein the rearward end of the hinge arm is swivably supported between or adjacent to the ribs. Inside the wing box, additional installation space for supporting the hinge arm is available and may be used through attaching or supporting the respective parts to lateral faces of the ribs. This allows a simple design for mechanically holding a support for the hinge arm and allows to place the rearward end further away from the leading edge.

Furthermore, the disclosure relates to an aircraft comprising at least one wing according to the above.

### Brief description of the figures

In the following, the attached drawings are used to illustrate exemplary embodiments in more detail. The illustrations are schematic and not to scale. Identical reference numerals refer to identical or similar elements. They show:
Fig. 1 schematically shows a part of an aircraft in a top view with a partial section.
Fig. 2 and 3 show a part of a wing with a droop nose.
Fig. 4 schematically shows a front spar having a framework structure.

### Detailed description of exemplary embodiments

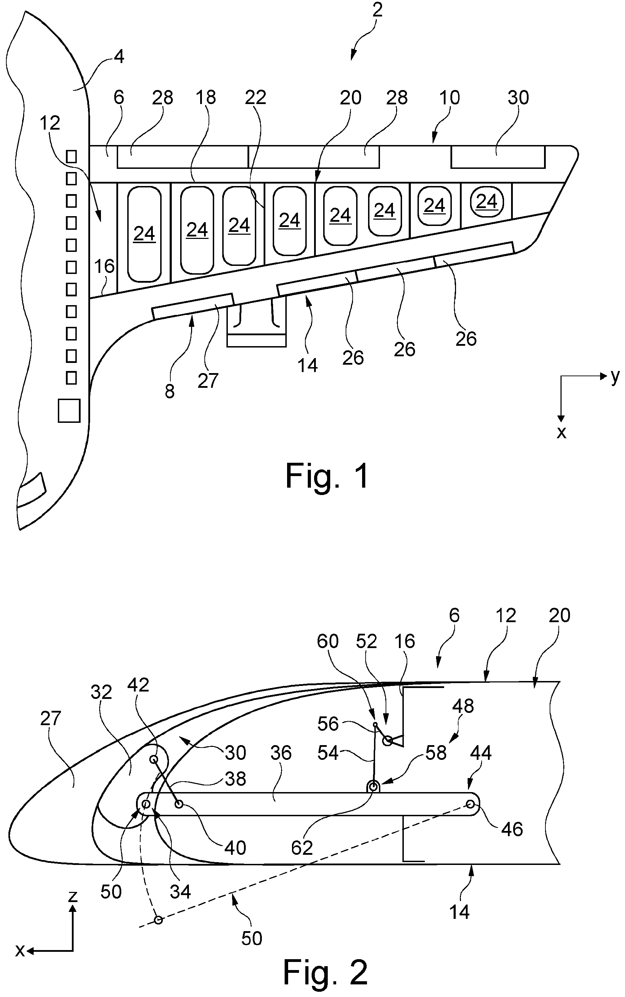

Fig. 1 shows a part of an aircraft 2 having a fuselage 4 and a wing 6. The wing 6 comprises a leading edge 8 as a first chordwise edge, the trailing edge 10 as a second chordwise edge, an upper skin 12 extending between the leading edge 8 and the trailing edge 10 and a lower skin 14, which is obstructed in this view and which also extends between the leading-edge 8 and the trailing edge 10. A front spar 16 runs along the leading-edge 8, extends substantially in spanwise direction and is preferably parallel to the z-axis, which is the vertical axis in an aircraft-fixed coordinate system. A rear spar 18 is provided, which extends substantially parallel to the trailing edge 10. It is to be understood, that the front spar 16 and the rear spar 18 are completely enclosed by the upper skin 12 and the lower skin 14. The upper skin 12, the lower skin 14, the front spar 16 and the rear spar 18 create a wing box 20.

On the inner surfaces of the upper skin 12 and the lower skin 14 a plurality of chordwise stiffening elements, such as stringers or the like, may be arranged. Together with a plurality of parallelly arranged ribs 22 that extend between the front spar 16 and the rear spar 18 in chordwise directions, the wing box 20 constitutes a rigid, load-carrying structure. Exemplary, several pressure tanks 24 are arranged inside the wing box 20 and are distanced to each other in the span wise direction. Different than in common commercial or transport aircraft neither the front spar 16 nor the rear spar 18 needs to be fluid-tight since the wing box 20 itself is not used as a fuel tank. It is to be understood, that instead of several pressure tanks 24, other separate tanks may be provided or even electrical storage devices or any other energy carrier storing devices.

The wing 6 furthermore comprises leading-edge high-lift devices 26 and 27, which are exemplarily realized in the form of slats 26 and droop noses 27. At the trailing edge 10, trailing-edge high-lift devices 28 in the form of slats are provided. In addition, an aileron 30 is shown. Due to the wing box 20 not acting as a fuel tank itself, in particular the front spar 16 allows to hold support devices for supporting the leading-edge high-lift devices 26 and 27.

In fig. 2, a cross-sectional view of a forward part of the wing 6 is shown, with the droop nose 27 in a retracted position. At the rear side 30 of the droop nose 27, a bracket 32 is attached. A bottom joint 50 of the bracket 32 is coupled with a forward end 34 of a hinge arm 36. An auxiliary lever 38 connects an intermediate section 40 of the hinge arm 36 with an upper joint 42 of the bracket 32. Thus, the droop nose 27 is rigidly connected to the hinge arm 36 and exactly follows the motion of its forward end 34. A rearward end 44 is coupled with a swiveling joint 46, which is arranged inside the wing box 20 behind the front spar 16. For reaching the swiveling joint 46, the hinge arm 36 extends through an opening 48 of the front spar 16. The hinge arm 36 thus has a length clearly exceeds the length of comparable linkages of common aircraft. This allows to provide a clearly increased radius of deployment of the forward end 34. For a vertical motion component that is required for extending the droop nose 27, a significantly lower angular motion of the hinge arm 36 is required.

For driving the hinge arm 36 to swivel around the swiveling joint 46, exemplarily a geared rotary actuator 52 is shown that comprises an actuator arm 56.

A first end 58 of an actuation lever 54 is coupled with a driving joint 62 arranged between the forward end 34 and the rearward end 44 of the hinge arm 36. A second end 60 of the actuation lever 54 is coupled with the actuator arm 56. By rotating the actuator arm 56, the actuation lever 54 is pulled upwards or pushed downwards to move the hinge arm 36 accordingly. Other variants are also conceivable, which may also include linear actuators.

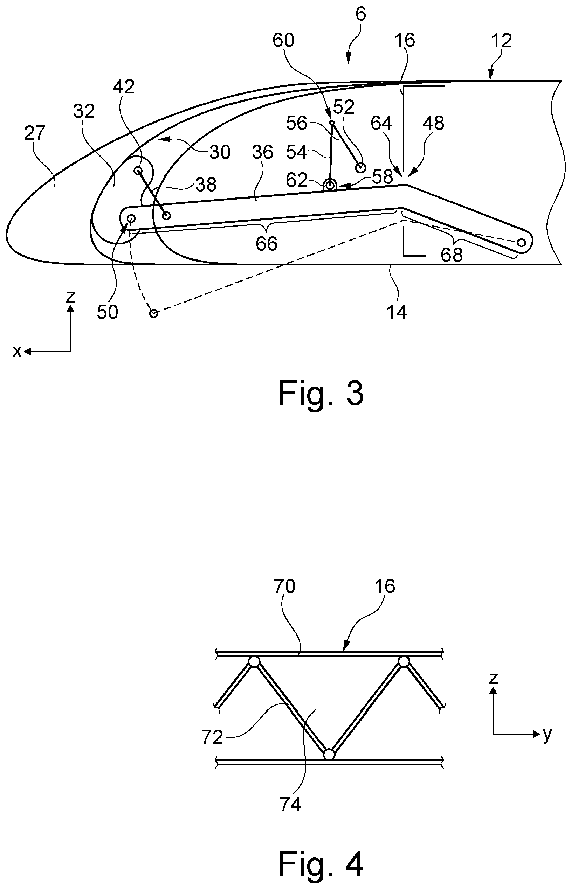

In fig. 3 substantially the same arrangement is shown as in fig. 2. However, here the hinge arm 36 comprises a kink 64, which separates a forward section 66 from a rearward section 68. The hinge arm 36 thus comprises an inverted V-shape, and in the retracted position of the droop nose 27, the kink 64 is above the forward end 34 and the rearward end 44. This may further increase the radius of deployment.

Lastly, fig. 4 shows the front spar 16 in a front view. It is apparent that the front spar 16 exemplarily comprises a framework structure with longitudinal beams 70 and crossbeams 72, that are interconnected. Between the beams 70 and the crossbeams 72, a plurality of openings 74 are provided. These allow to pass through at least the hinge arm 36.

### Reference numerals

- 2: aircraft
- 4: fuselage
- 6: wing
- 8: leading edge
- 10: trailing edge
- 12: upper skin
- 14: lower skin
- 16: front spar
- 18: rear spar
- 20: wing box
- 22: rib
- 24: pressure tank
- 26: leading-edge high-lift device / slat
- 27: droop nose
- 28: trailing-edge high-lift device
- 30: rearward side
- 32: bracket
- 34: forward end
- 36: hinge arm
- 38: auxiliary lever
- 40: intermediate section
- 42: upper joint
- 44: rearward end
- 46: swiveling joint
- 48: opening
- 50: bottom joint
- 52: geared rotary actuator
- 54: actuation lever
- 56: actuator arm
- 58: first end
- 60: second end
- 62: driving joint
- 64: kink
- 66: forward section
- 68: rearward section
- 70: longitudinal beam
- 72: crossbeam
- 74: opening

## Claims

1. Wing (6) for an aircraft (2), comprising:
a leading edge (8),
a trailing edge (10),
an upper skin (12) extending between the leading edge (8) and the trailing edge (10),
a lower skin (14) extending between the leading edge (8) and the trailing edge (10),
at least one spar (16, 18) extending between the upper skin (12) and the lower skin (14) in a spanwise direction to create a wing box (20) with the upper skin (12) and the lower skin (14), and
at least one droop nose (27) arranged at the leading edge (8),
wherein the at least one droop nose (27) is coupled with a forward end (34) of a hinge arm (36) that extends in a chordwise direction, and
wherein a rearward end (44) of the hinge arm is swivably supported regarding to the wing in the wing box (20),
wherein the at least one spar comprises at least a front spar (16);
wherein the hinge arm (36) extends through an opening (48) arranged in the front spar (16), and
wherein the rearward end (44) of the hinge arm is coupled with a swiveling joint (46), which is arranged inside the wing box (20) behind the front spar (16);
further comprising an actuator (52) coupled with the hinge arm (36),
wherein the actuator (52) is arranged in front of the wing box (20) and/or directly on the at least one front spar (16, 18).

2. The wing (6) of claim 1,
wherein the at least one spar (16, 18) also comprises a rear spar (18), and
wherein the rearward end (44) is arranged rearward of the front spar (16).

3. The wing (6) of any of the preceding claims,
wherein the at least one spar (16, 18) comprises a framework structure.

4. The wing (6) of any of the preceding claims,
wherein the hinge arm (36) comprises a forward section (66), a rearward section (68) and a kink (64) between the forward section (66) and the rearward section (68), and
wherein the sections (66, 68) run vertically upwards towards the kink (64) in a retracted position of the droop nose (27).

5. The wing (6) of claim 4,
wherein the kink (27) passes through a plane defined by the front spar (16) when moving the hinge arm (36) between a retracted position and extended positions.

6. The wing (6) of claim 4 or 5,
wherein the rearward section (68) of the hinge arm (36) is substantially horizontal in a maximum extended position of the droop nose (27).

7. The wing (6) of any of the preceding claims,
wherein the hinge arm (36) is designed to move the forward end (34) downwards to extend the droop nose (27).

8. The wing (6) of any of the preceding claims,
wherein the swiveling joint (46) is having a swivel axis that is arranged at a relative chordwise position of at least 20% of the respective local chord.

9. The wing (6) of any of the preceding claims,
further comprising a plurality of parallel ribs (22) between the upper skin (12) and the lower skin (14), extending in a chordwise direction and arranged at a distance to each other, and
wherein the rearward end (44) of the hinge arm (36) is swivably supported between or adjacent to the ribs (22).

10. Aircraft (2) comprising at least one wing (6) according to any of the preceding claims.

## Patentansprüche

1. Flügel (6) für ein Luftfahrzeug (2), aufweisend:
eine Vorderkante (8),
eine Hinterkante (10),
eine obere Beplankung (12), die sich zwischen der Vorderkante (8) und der Hinterkante (10) erstreckt,
eine untere Beplankung (14), die sich zwischen der Vorderkante (8) und der Hinterkante (10) erstreckt,
mindestens einen Holm (16, 18), der sich zwischen der oberen Beplankung (12) und der unteren Beplankung (14) in einer Spannweitenrichtung erstreckt, um mit der oberen Beplankung (12) und der unteren Beplankung (14) einen Flügelkasten (20) zu bilden, und
mindestens eine absenkbare Nase (27), die an der Vorderkante (8) angeordnet ist,
wobei die mindestens eine absenkbare Nase (27) mit einem vorderen Ende (34) eines Schwenkarms (36) gekoppelt ist, der sich in einer Profiltiefenrichtung erstreckt, und
wobei ein hinteres Ende (44) des Schwenkarms bezüglich des Flügels in dem Flügelkasten (20) schwenkbar gelagert ist,
wobei der mindestens eine Holm mindestens einen Vorderholm (16) aufweist;
wobei sich der Schwenkarm (36) durch eine in dem Vorderholm (16) angeordnete Öffnung (48) erstreckt, und
wobei das hintere Ende (44) des Schwenkarms mit einem Schwenkgelenk (46) gekoppelt ist, das im Inneren des Flügelkastens (20) hinter dem Vorderholm (16) angeordnet ist;
ferner aufweisend einen Aktuator (52), der mit dem Schwenkarm (36) gekoppelt ist,
wobei der Aktuator (52) vor dem Flügelkasten (20) und/oder direkt an dem mindestens einen Vorderholm (16, 18) angeordnet ist.

2. Flügel (6) nach Anspruch 1,
wobei der mindestens eine Holm (16, 18) auch einen Hinterholm (18) aufweist, und
wobei das hintere Ende (44) hinter dem Vorderholm (16) angeordnet ist.

3. Flügel (6) nach einem der vorhergehenden Ansprüche,
wobei der mindestens eine Holm (16, 18) eine Fachwerkkonstruktion aufweist.

4. Flügel (6) nach einem der vorhergehenden Ansprüche,
wobei der Schwenkarm (36) einen vorderen Abschnitt (66), einen hinteren Abschnitt (68) und einen Knick (64) zwischen dem vorderen Abschnitt (66) und dem hinteren Abschnitt (68) aufweist, und
wobei die Abschnitte (66, 68) in einer eingefahrenen Stellung der absenkbaren Nase (27) vertikal nach oben zu dem Knick (64) hin verlaufen.

5. Flügel (6) nach Anspruch 4,
wobei der Knick (27) durch eine durch den Vorderholm (16) definierte Ebene tritt, wenn der Schwenkarm (36) zwischen einer eingefahrenen Stellung und ausgefahrenen Stellungen bewegt wird.

6. Flügel (6) nach Anspruch 4 oder 5,
wobei der hintere Abschnitt (68) des Schwenkarms (36) in einer maximal ausgefahrenen Stellung der absenkbaren Nase (27) im Wesentlichen horizontal ist.

7. Flügel (6) nach einem der vorhergehenden Ansprüche,
wobei der Schwenkarm (36) dazu ausgebildet ist, das vordere Ende (34) nach unten zu bewegen, um die absenkbare Nase (27) auszufahren.

8. Flügel (6) nach einem der vorhergehenden Ansprüche,
wobei das Schwenkgelenk (46) eine Schwenkachse aufweist, die an einer relativen Profiltiefenposition von mindestens 20 % der jeweiligen lokalen Profiltiefe angeordnet ist.

9. Flügel (6) nach einem der vorhergehenden Ansprüche,
ferner aufweisend eine Vielzahl von parallelen Rippen (22) zwischen der oberen Beplankung (12) und der unteren Beplankung (14), die sich in einer Profiltiefenrichtung erstrecken und in einem Abstand zueinander angeordnet sind, und
wobei das hintere Ende (44) des Schwenkarms (36) zwischen oder angrenzend an die Rippen (22) schwenkbar gelagert ist.

10. Luftfahrzeug (2), aufweisend mindestens einen Flügel (6) nach einem der vorhergehenden Ansprüche.

## Revendications

1. Aile (6) pour un aéronef (2), comprenant :
un bord d'attaque (8),
un bord de fuite (10),
un revêtement supérieur (12) s'étendant entre le bord d'attaque (8) et le bord de fuite (10),
un revêtement inférieur (14) s'étendant entre le bord d'attaque (8) et le bord de fuite (10),
au moins un longeron (16, 18) s'étendant entre le revêtement supérieur (12) et le revêtement inférieur (14) dans une direction de l'envergure pour former un caisson de voilure (20) avec le revêtement supérieur (12) et le revêtement inférieur (14), et
au moins un bec tombant (27) disposé au niveau du bord d'attaque (8),
dans laquelle le au moins un bec tombant (27) est couplé à une extrémité avant (34) d'un bras d'articulation (36) qui s'étend dans une direction de la corde, et
dans laquelle une extrémité arrière (44) du bras d'articulation est supportée de manière pivotante par rapport à l'aile dans le caisson de voilure (20),
dans laquelle le au moins un longeron comprend au moins un longeron avant (16) ;
dans laquelle le bras d'articulation (36) s'étend à travers une ouverture (48) ménagée dans le longeron avant (16), et
dans laquelle l'extrémité arrière (44) du bras d'articulation est couplée à un joint pivotant (46) qui est disposé à l'intérieur du caisson de voilure (20) derrière le longeron avant (16) ;
comprenant en outre un actionneur (52) couplé au bras d'articulation (36),
dans laquelle l'actionneur (52) est disposé devant le caisson de voilure (20) et/ou directement sur le au moins un longeron avant (16, 18).

2. Aile (6) selon la revendication 1,
dans laquelle le au moins un longeron (16, 18) comprend également un longeron arrière (18), et
dans laquelle l'extrémité arrière (44) est disposée en arrière du longeron avant (16).

3. Aile (6) selon l'une quelconque des revendications précédentes,
dans laquelle le au moins un longeron (16, 18) comprend une structure en treillis.

4. Aile (6) selon l'une quelconque des revendications précédentes,
dans laquelle le bras d'articulation (36) comprend une section avant (66), une section arrière (68) et un coude (64) entre la section avant (66) et la section arrière (68), et
dans laquelle les sections (66, 68) s'étendent verticalement vers le haut vers le coude (64) dans une position rentrée du bec tombant (27).

5. Aile (6) selon la revendication 4,
dans laquelle le coude (27) traverse un plan défini par le longeron avant (16) lors du déplacement du bras d'articulation (36) entre une position rentrée et des positions sorties.

6. Aile (6) selon la revendication 4 ou 5,
dans laquelle la section arrière (68) du bras d'articulation (36) est sensiblement horizontale dans une position sortie maximale du bec tombant (27).

7. Aile (6) selon l'une quelconque des revendications précédentes,
dans laquelle le bras d'articulation (36) est conçu pour déplacer l'extrémité avant (34) vers le bas afin de sortir le bec tombant (27).

8. Aile (6) selon l'une quelconque des revendications précédentes,
dans laquelle le joint pivotant (46) présente un axe de pivotement qui est disposé à une position relative dans la direction de la corde d'au moins 20 % de la corde locale respective.

9. Aile (6) selon l'une quelconque des revendications précédentes,
comprenant en outre une pluralité de nervures parallèles (22) entre le revêtement supérieur (12) et le revêtement inférieur (14), s'étendant dans une direction de la corde et disposées à distance les unes des autres, et
dans laquelle l'extrémité arrière (44) du bras d'articulation (36) est supportée de manière pivotante entre ou de manière adjacente aux nervures (22).

10. Aéronef (2) comprenant au moins une aile (6) selon l'une quelconque des revendications précédentes.
